(19) Europäisches Patentamt

European Patent Office

Office européen des brevets

(11) **EP 1 437 210 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(51) Int Cl.:
**B29B 7/76** *(2006.01)*     **B29C 67/24** *(2006.01)*
**B29K 75/00** *(2006.01)*

(21) Anmeldenummer: **03029857.4**

(22) Anmeldetag: **24.12.2003**

(54) **Verfahren zur Herstellung von Polyurethan-Formteilen**

Process for producing molded polyurethane articles

Procédé pour la fabrication de pièces moulées en polyuréthane

(84) Benannte Vertragsstaaten:
**DE FR GB IT**

(30) Priorität: **07.01.2003 DE 10300101**

(43) Veröffentlichungstag der Anmeldung:
**14.07.2004 Patentblatt 2004/29**

(73) Patentinhaber: **Hennecke GmbH**
**51379 Leverkusen (DE)**

(72) Erfinder:
• **Begemann, Michael, Dr.**
**92272 Freudenberg (DE)**
• **Sieben, Klaus**
**53639 Königswinter (DE)**

• **Wirth, Jürgen**
**51147 Köln (DE)**
• **Pawlik, Wolfgang**
**50735 Köln (DE)**

(74) Vertreter: **Feldhues, Michael L.F.**
**c/o Bayer AG,**
**Bayer Polymers LP-PL**
**51368 Leverkusen (DE)**

(56) Entgegenhaltungen:
**EP-A- 0 143 926        EP-A- 0 494 453**
**EP-A- 0 599 104        DE-A- 10 020 157**
**US-A- 4 399 104        US-A- 4 944 599**
**US-A- 5 261 741**

**Beschreibung**

Die Erfindung betrifft ein Verfahren zur Herstellung von Polyurethan-Formteilen, bei dem die Reaktionskomponenten unter Hochdruck in einem Mischkopf vermischt werden, wobei die Drücke und die Position der Mischkopf-Schieber bzw. der Düsennadeln und die Stellung der Hydraulikventile aufgenommen und von einer Überwachungseinrichtung erfasst und ausgewertet werden.

Die Herstellung von Polyurethan-Formteilen kann nach dem sogenannten RIM-Verfahren (Reaction Injection Molding) erfolgen, das heißt mit Form-Werkzeugen, bei denen das obere und das untere Formteil zusammengefahren sind und somit eine geschlossene Kavität bilden. Der Mischkopf ist dabei mit seinem Auslaüfsystem über einen Angusskanal mit der Kavität verbunden. Die Herstellung von Polyurethan-Formteilen kann aber auch mit Form-Werkzeugen erfolgen, bei denen das obere Formteil zunächst aufgefahren ist und das Polyurethan-Reaktionsgemisch über das Auslaufsystem des Mischkopfs in die offene Kavität eingetragen wird, und das obere Formteil nach Schussende zugefahren wird, das heißt die Form geschlossen wird.

Die Erfindung wird im folgenden im wesentlichen am Beispiel des RIM-Verfahrens erläutert, sie ist aber gleichermaßen auf Verfahren anwendbar, in denen das Polyurethan-Reaktionsgemisch über das Mischkopfauslaufsystem in die offene Form eingetragen wird.

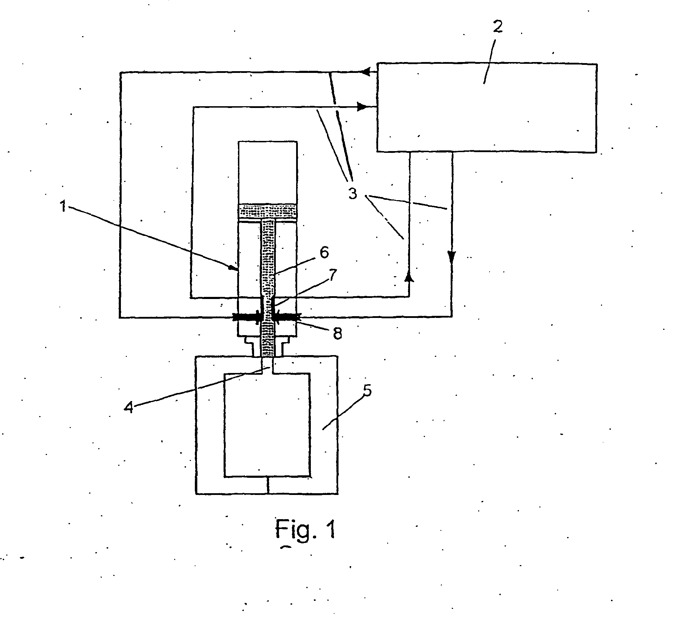

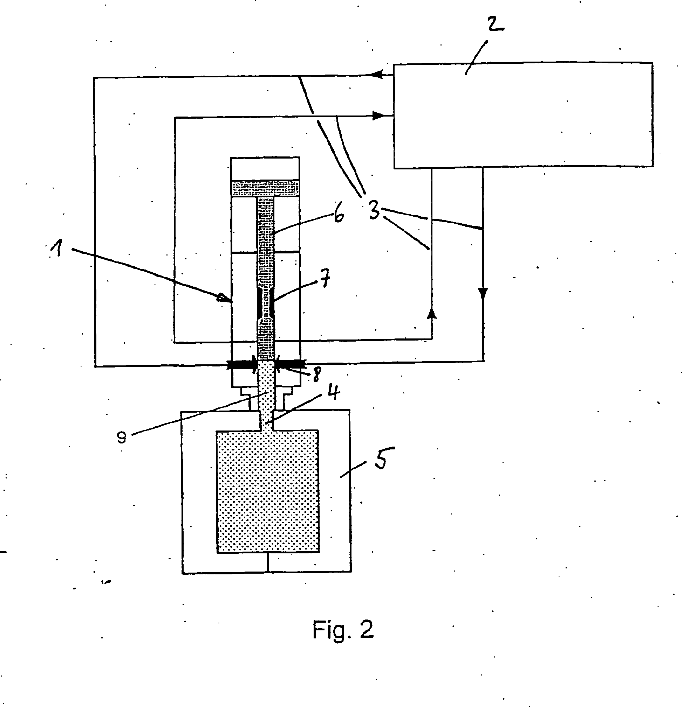

In dem RIM-Verfahren nach dem Stand der Technik (Figuren 1 und 2) werden einem Mischkopf von einer Dosiermaschine mindestens zwei miteinander reagierende flüssige Komponenten in einem vorgegebenen Mengenstromverhältnis über Rohr- oder Schlauchleitungen zugeführt. Der Mischkopf hat die Aufgabe, diese Komponenten; in der Regel Isocyanat und Polyol, homogen miteinander zu vermischen und das dabei entstehende Polyurethan-Reaktionsgemisch über einen Angusskanal, der zumeist Bestandteil der Form ist, in eine Form (Formwerkzeug) abzugeben. Das in die Form verbrachte flüssige Reaktionsgemisch härtet nach einiger Zeit aus. Danach kann die Form, die in der Regel mehrteilig ausgeführt ist, geöffnet werden, um das fertige Formteil zu entnehmen. Die Form ist in der Regel in einem Formenträger (nicht abgebildet) eingebaut, der die Form öffnet, schließt und im geschlossenen Zustand gegen den entstehenden Forminnendruck zuhält. Bei dem RIM-Verfahren ist der Mischkopf in der Regel fest an das Formwerkzeug angebaut ist. Es ist aber ebenso möglich, den Mischkopf vor jedem Schuss mit einem speziellen Mischkopfportal oder manuell an das Werkzeug anzudocken. Die hierbei eingesetzten Mischköpfe sind sogenannte Hochdruckmischköpfe, die beispielsweise nach dem Gegenstrominjektionsverfahren arbeiten.

US-A-5,261,741 offenbart ein Verfahren zur Herstellung von Polyurethan-Formteilen gemäß dem oberbegriff des Anspruchs 1, bei dem die Funktion des Stößels während dessen Bewegung überwacht wird. Dabei wird die beim Überfahren der Düsenöffnungen durch die Stößel-Endkappe planmäßig auftretende Druckspitze in den Komponentenleitungen mittels einer zeitabhängigen Druckerfassung detektiert. Wenn der Stößel bricht oder hängen bleibt, tritt diese Druckspitze nicht auf, so dass dann durch den Vergleich mit einer in der Überwachungseinrichtung hinterlegten Referenz-Druckkurve mit Druckspitze eine Störung detektiert wird. Gleichzeitig wird überwacht, ob der Stößel tatsächlich seine Endposition erreicht. Sowohl die Überwachung der Drücke in den Komponentenleitungen als auch die Überwachung, ob der Stößel tatsächlich seine Endposition erreicht, findet jedoch nur in dem Zeitraum statt, der für die Bewegung des Stößels vorgegeben ist.

DE-A-100 20 157 offenbart ein Verfahren zur Herstellung von Polyurethan-Schaumstoffen, bei dem die Komponenten über Einspritzdüsen in den Mischkopf eingedüst und darin vermischt werden. Der Öffnungsquerschnitt der Einspritzdüsen in den Mischkopf ist dabei einstellbar.

US-A-4,399,104 offenbart ein Verfahren zur Herstellung von Polyurethan-Schaumstoffen, bei dem die Durchflussraten während des Herstellprozesses bei vorgegebenen Komponentendrücken erfasst und geregelt werden.

EP-A-494 453 offenbart ein Verfahren zur Vermischung von zwei reaktiven polymeren Komponenten bei intermittierendem Betrieb, bei dem ein festes Verhältnis der Massenflüsse beider Komponenten sowohl beim Anfahren als auch beim Dauerbetrieb eingestellt wird.

EP-A-599 104 offenbart ein Verfahren zur Vermischung von zwei reaktiven polymeren Komponenten, bei dem die Massenflüsse beider Komponenten trotz sich ändernder Viskositäten gleich gehalten werden.

EP-A-143 926 betrifft ein Verfahren zur Herstellung von Polyurethan-Schaumstoffen, bei dem die Drükke der Komponenten durch eine Einrichtung, die eine konstante Kraft erzeugt, konstant gehalten werden. Hierdurch werden Druckschwankungen, die beim Mischen insbesondere dann auftreten können, wenn Ventile geöffnet und geschlossen werden, kompensiert.

US-A-4,944,599 betrifft ein Verfahren zur Herstellung von Polyurethan-Schaumstoffen, bei dem die Komponenten in einem Hochdruck-Gegenstrominjektionsmischer vermischt werden. Um einen konstanten Druck und Volumenstrom aus dem Mischer zu erreichen, werden im Bereich des Mischers Druck und Volumenstrom erfasst und die Pumpenleistung und Stellung der Düsennadeln angesteuert.

Die Herstellung des Formteiles kann in nacheinander ablaufende Phasen unterteilt werden. Zu Beginn des Produktionsvorganges befindet sich der im Inneren des Mischkopfes befindliche hydraulisch angetriebene Schieber in einer Position, die die Rezirkulation der Komponenten über den Mischkopf erlaubt. Das bedeutet, dass der Komponenten-Mengenstrom, der von der Dosiermaschine dosiert wird, dem Mischkopf über den Zulauf zufließt. Im Mischkopf wird der Komponentenstrom durch Nuten und Kanäle in den Rücklauf geleitet. Von dort fließen die Komponentenmengenströme zurück zur Dosiermaschine. Die Kanäle im Mischkopf, welche von den Komponenten durchflossen werden, können auch durch eine andere geometrische Anordnung von Mischkopfgehäuse und Schieber oder auch von Mischkopfgehäuse und mehreren Schiebern gebildet werden. Die abgebildete Mischkopfausführung ist nur eine mögliche Variante. Ausgehend von einer leeren geschlossenen Form (Fig. 1) wird im Hochdruckmischkopf ein oder mehrere hydraulisch angetriebene Schieber bewegt. Diese Schieber haben die Aufgabe, die Flüssigkeitsströme der zu vermischenden Komponenten so zu leiten, dass sie zusammengeführt werden und ein homogen vermischtes Reaktionsgemisch entsteht, welches aus dem Mischkopf austritt und in die Form abgegeben wird. Hierbei wird soviel Reaktionsgemisch abgegeben, dass die Form gefüllt ist (Fig. 2).

Um die genau benötigte Menge in das Formwerkzeug abzugeben, erfolgt die Dosierung der Reaktionskomponenten mit Hilfe einer Dosiermaschine. Diese dosiert jede Komponente in einem fest definierten Mengenstrom. Alle Komponenten werden die gleiche, festgelegte Zeit lang dosiert. Über eine elektrische Steuerung wird diese Zeit überwacht. Der Beginn und das Ende des Dosiervorganges wird durch die Bewegung eines oder mehrerer hydraulisch bewegter Schieber im Mischkopf gesteuert. Nach dem Misch- und Füllvorgang bewegt sich der oder die hydraulischen Schieber in einer Weise, dass Reste des Polyurethan-Reaktionsgemisches völlig aus dem Mischkopf ausgeschoben werden und die Komponenten-Mengenströme wieder über den Mischkopf rezirkulieren. Anschließend härtet das in die Form eingebrachte Reaktionsgemisch aus und es entsteht ein festes Polyurethan-Formteil, das der Form nach ihrem Öffnen entnommen werden kann.

Bei der RIM-Produktion mit Anbau-Mischköpfen kann es aus den verschiedensten Gründen zu gravierenden Anlagenschäden kommen, deren Ursache außerhalb des Bereichs der Dosierung (Dosiermaschine, Mischkopf) liegt. Beispielsweise ist es möglich, dass Reste eines fertigen Formteiles im Angussbereich der Form beim Entformen vergessen werden. Hierdurch wird dann die Auslassöffnung des Mischkopfes verschlossen und es entsteht während des Dosiervorganges ein unzulässiger Druck in den Komponentenleitungen, welche die Dosiermaschine und den Mischkopf verbinden. Dies führt dann zur Störung und zum automatischen Abschalten der ganzen Anlage aufgrund der Überschreitung eines maximal zulässigen Druckes. Die Abschaltung erfolgt durch die elektronische Steuerung der Anlage. Eine solche Abschaltung aufgrund der Überschreitung eines maximal zulässigen Druckes kann auch durch Fehler auftreten, die ursächlich im Bereich der Dosierung (Dosiermaschine, Mischkopf) zu suchen sind. So ist es beispielsweise möglich, dass eine Düse im Mischkopf durch Schmutzpartikel verstopft wird. Dies verursacht einen höheren Strömungswiderstand und führt zum Überschreiten des maximal zulässigen Drucks. Fehler, die ursächlich im Bereich der Dosierung (Dosiermaschine, Mischkopf) entstehen, sind in der Regel vom Maschinenbediener erkennbar und führen auch bei einem Wiedereinschalten der Anlage zu keinen Anlagenschäden. Im Gegensatz hierzu können Fehler, die ihre Ursache außerhalb des Systems Dosiermaschine-Mischkopf haben, bei einem Wiedereinschalten der Anlage zu Schäden führen.

Ist beispielsweise der Angusskanal verstopft, so steigt der Druck in einer Komponentenleitung, beispielsweise aufgrund einer höheren Austragsleistung, schneller als in der anderen. Daher wird ein Komponenteilstrom von der Komponentenleitung mit dem höheren Druck über die mit Reaktionsgemisch gefüllte Mischkammer 9 in die Leitung mit dem geringeren Druck gedrückt. Dies ist möglich, weil die Komponentenleitungen sich bei einem Druckanstieg ausdehnen und somit ihr Volumen vergrößern. Steigt der Druck in der Isocyanatleitung z.B. schneller als der Druck in der Polyolleitung, kann Isocyanat in die Polyolleitung eintreten. Dies führt dann zur Bildung eines Reaktionsgemisches in der Polyolleitung und es entsteht festes Polyurethan. Wird die Anlage nach dem Auftreten dieses Fehlers wieder in Betrieb genommen, wird das Reaktionsgemisch durch die Rezirkulation der Komponenten über die gesamte Anlage verschleppt. Dies hat zur Folge, dass sämtliche Schlauch- und Rohrleitungen durch festes, ausreagiertes Polyurethan verstopft werden. Würde man das Wiedereinschalten der Anlage nach einem solchen Fehler verhindern, würden nur die Komponentenleitungen in Mitleidenschaft gezogen, die sich in der Nähe des Mischkopfes befinden.

Bisher bekannte RIM-Anlagen sind zum Schutz der Anlage mit einer automatischen Druck-überwachung ausgestattet. Diese schaltet die Anlage automatisch ab, wenn in einer der Komponentenleitungen ein maximal zulässiger Druck überschritten wird. Diese Druckabschaltung berücksichtigt jedoch nur das Ereignis der Drucküberschreitung, unabhängig davon wann und in welchem Zusammenhang sie aufgetreten ist. Das bedeutet, dass weitere Anlagenparameter nicht berücksichtigt werden und nicht im Zusammenhang mit der Druckabschaltung betrachtet werden können, so dass für den Anlagenbediener nicht ersichtlich ist, wo die Ursache einer automatischen Abschaltung aufgrund einer Überschreitung des zulässigen Drucks zu suchen ist.

Aufgabe der vorliegenden Erfindung ist daher, ein Verfahren zur Herstellung von Polyurethan-Formteilen zur Verfügung zu stellen, bei dem nach Druckanstieg und Abschalten der Dosierung der Komponenten abgeschätzt werden kann, wo der Fehler aufgetreten ist und ob die Anlage ohne größere Reparatur oder Reinigung wieder in Betrieb genommen werden kann.

Diese Aufgabe wird durch ein Verfahren gemäß dem Anspruch 1 gelöst.

Die Erfindung betrifft ein Verfahren zur Herstellung von zelligen oder kompakten Polyurethan-Formteilen, bei dem mindestens eine Isocyanatkomponente und mindestens eine Polyolkomponente mit einer Dosiermaschine über Komponentenleitungen in einen Mischkopf dosierend gefördert und in der Mischkammer zu einem Polyurethan-Reaktionsgemisch vermischt werden, und anschließend das Polyurethan-Reaktionsgemisch aus der Mischkammer in eine Form ausgetragen wird, wobei die Drücke der Komponenten mittels Druckaufnehmern in den Komponentenleitungen erfasst werden und an eine Überwachungseinrichtung übermittelt werden, dadurch gekennzeichnet, dass die zeitlichen Verläufe der Drücke mit in der Überwachungseinrichtung hinterlegten Referenz-Druckverläufen verglichen werden und bei Abweichung mindestens eines der gemessenen Druckverläufe von dem hinterlegten Referenz-Druckverlauf über eine vorgegebene Toleranzschwelle hinaus eine Störung signalisiert wird.

Die Drücke der Komponenten können auch noch beispielsweise in der Mischkammer oder in der Form gemessen und an die Überwachungseinrichtung übermittelt werden.

In dem erfindungsgemäßen Verfahren wird bevorzugt zusätzlich signalisiert, an welchem Ort bzw. zu welcher Zeit die Abweichung des gemessenen Druckverlaufs von dem hinterlegten Referenz-Druckverlauf über die vorgegebene Toleranzschwelle hinaus aufgetreten ist.

Bei der Durchführung des erfindungsgemäßen Verfahrens kann abgeschätzt werden, ob eine Störung bzw. ein Fehlerzustand vorliegt, dessen Ursache im Bereich der Dosierung (Dosiermaschine, Mischkopf) zu suchen ist oder ob eine Störung eingetreten ist, die durch einen Fehler außerhalb des Bereichs der Dosierung, beispielsweise im Formwerkzeug, verursacht wird. Außerdem kann abgeschätzt werden, ob ein schwerer Schaden aufgetreten ist oder ob der Schaden minderschwer oder gering ist.

Die Dosierung der Komponenten in die Mischkammer wird durch das Öffnen und Schließen von Schiebern eingeleitet und beendet, durch welche die Öffnungen der Düsen in die Mischkammer geöffnet oder verschlossen werden, wobei das Öffnen und Schließen der Schieber hydraulisch erfolgt und durch das Öffnen und Schließen jeweils zugeordneter Hydraulikventile initiiert wird, und auch der Zeitpunkt des Öffnens und Schließens der Hydraulikventile und der Zeitpunkt des Öffnens und Schließens der Schieber an die Überwachungseinrichtung übermittelt wird, und die Überwachungseinrichtung die übermittelten Positionen der Schieber und die übermittelten Stellungen der Hydraulikventile den übermittelten Druckverläufen der Komponenten zeitlich zuordnet, so dass die übermittelten Druckverläufe der Komponenten in Bezug auf den Schussbeginn und das Schussende zeitlich zugeordnet werden können.

Die Erfindung wird im folgenden anhand der Figuren näher erläutert.

Figur 1 zeigt eine Anlage zur Herstellung von Polyurethan-Formteilen nach dem RIM-Verfahren, bei der die Eduktkomponenten über den Mischkopf im Kreislauf geführt werden.

Figur 2 zeigt eine Anlage zur Herstellung von Polyurethan-Formteilen nach dem RIM-Verfahren, bei der die Komponenten in die Mischkammer eingedüst und dort vermischt werden und anschließend über das Mischkopfausläufsystem und den Angusskanal in die Kavität eingetragen werden.

Figur 3 zeigt eine Anlage zur Herstellung von Polyurethan-Formteilen nach dem RIM-Verfahren, in der das erfindungsgemäße Verfahren durchgeführt werden kann.

Figuren 4 und 5 zeigen beispielhaft zeitliche Verläufe der Komponentendrücke für Polyol (A) und Isocyanat (B) sowie des Schaltsignals (C) und des Initiatorsignals (D) in dem RIM-Verfahren.

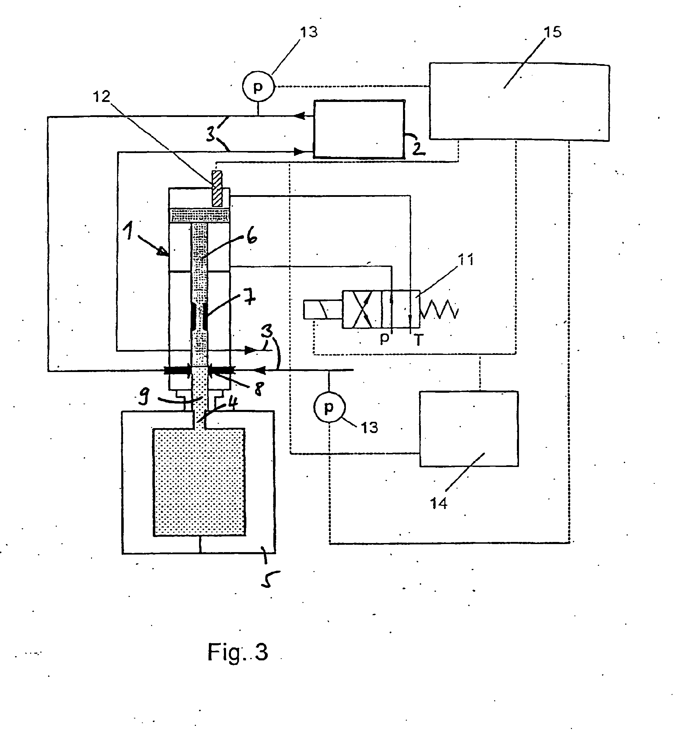

Die Figuren 1 und 2 zeigen die gleichen Anlagen in verschiedenen Produktionszuständen. In Figur 1 ist die Anlage in Kreislauffahrweise und in Figur 2 im Schussbetrieb gezeigt. Figur 3 baut auf Figur 2 auf und enthält zusätzlich für die Steuerung und Überwachung des Prozesses benötigte Elemente. Die Bezugzeichen der Elemente in Figur 1 gelten daher auch für die entsprechenden Elemente in den Figuren 2 und 3.

In der RIM-Anlage nach Figur 3. werden die hydraulischen Schaltsignale von der Anlagensteuerung 14 erzeugt und dienen dazu Hydraulikventile 11 zu betätigen. Die Hydraulikventile bewirken schließlich die Bewegung der hydraulisch angetriebenen Schieber 6 im Mischkopf 1. Bestimmte Positionen dieser Schieber 6 werden über Initiatoren 12, zum Beispiel induktive Näherungsschalter, abgefragt und deren Signal an die Anlagensteuerung 14 und an die Überwachungseinrichtung 15 übermittelt. Dabei können Anlagensteuerung 14 und Überwachungseinrichtung 15 auch in einem Gerät zusammengefasst sein. Die Abfolge von hydraulischen Schaltsignalen und Initiatorsignalen in einem Produktionszyklus ist für jeden Mischkopftyp vorgegeben und charakteristisch. Anhand dieser Abfolge lässt sich die Phase des Produktionsvorganges bestimmen. Diese Signale und die gemessenen Druckverläufe in den Komponentenleitungen 3, durch welche die Komponenten von der Dosiermaschine 2 zum Mischkopf 1 fließen, werden an die Anlagensteuerung 14 und die Überwachungseinrichtung 15 übermittelt. Zum Messen der Drücke sind Druckaufnehmer 13 in die Leitungen eingebaut.

Die zeitliche Abfolge der einzelnen Signale während der Herstellung der Polyurethan-Formteile kann dabei für unterschiedliche Mischkopftypen und andere unterschiedliche Anlagenkomponente verschieden sein kann.

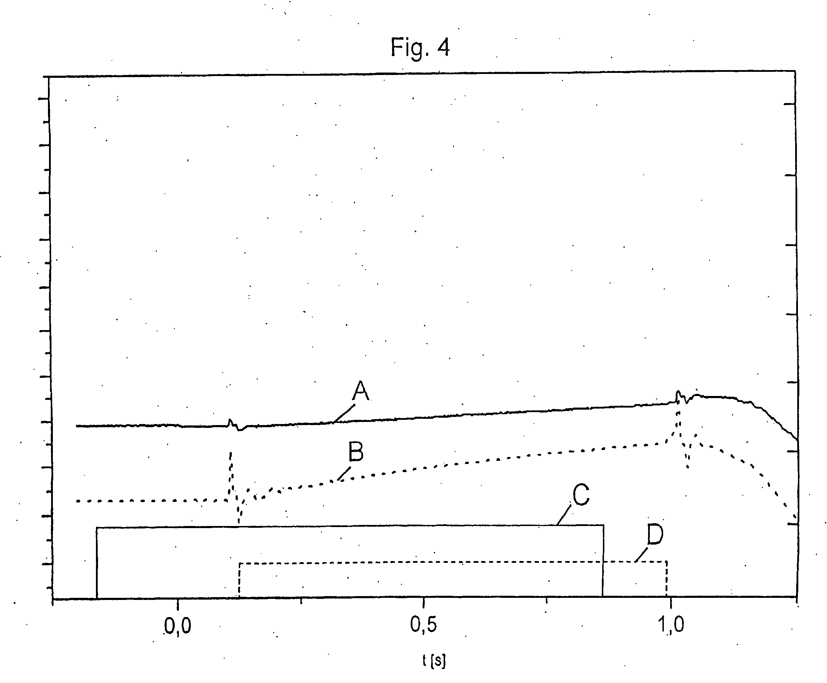

Für die in Figur 3 dargestellte Anlage sehen die Signal- und Druckverläufe für einen normalen, das heißt störungsfreien, Produktionszyklus typischerweise aus wie in Fig. 4 abgebildet. Der Signalablauf kann dabei in 3 Phasen unterteilt werden. Vor Beginn der ersten Phase (Phase 1) ist der Schieber 6 in der Position, in der die Komponenten über Nuten und Kanäle 7 im Kreislauf gefördert werden. Die erste Phase wird dadurch eingeleitet, dass die Anlagensteuerung 14 ein hydraulisches Schaltsignal ausgibt, welches das Hydraulikventil schaltet, durch das der Schieber 6 bewegt wird. Der hydraulische Antrieb des Schiebers 6 wird also angesteuert. Der Schieber 6 bewegt sich daher aus der Position, in der die Eduktkomponenten im Kreislauf geführt werden, in die Position, in der die Komponenten durch die Düsen 8 in die Mischkammer 9 eingedüst werden (Produktionsstellung). Ist er in der Produktionsstellung angekommen gibt der Initiator 12 ein Signal an die Anlagensteuerung 14 und die Überwachungseinrichtung 15 aus. Hat die Anlagensteuerung 14 das Signal vom Initiator 12 erhalten und steht der Schieber 6 in Produktionsstellung, so beginnt die zweite Phase. In der zweiten Phase werden die Komponenten in der Mischkammer 9 vermischt und treten als flüssiges Polyurethan-Reaktionsgemisch aus der Mischkammer 9 aus und werden in das Formwerkzeug 5 geleitet. Die dritte Phase beginnt, wenn das Formwerkzeug 5 bis zu dem gewünschten Füllgrad befüllt ist, und wird durch erneutes Schalten des hydraulischen Schaltsignals eingeleitet. Die dritte Phase endet bevorzugt nach einer festen Zeit, beispielsweise nach 300 Millisekunden.

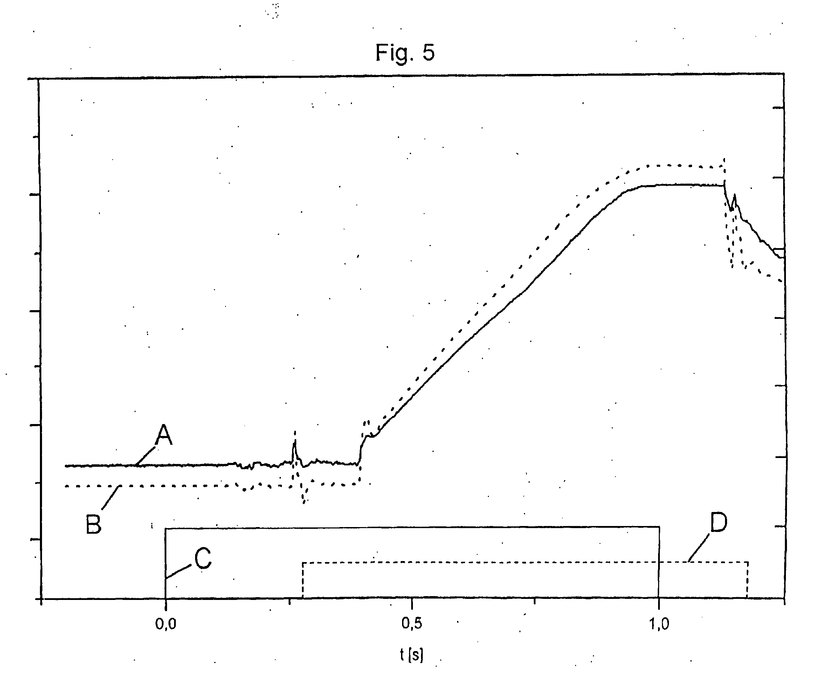

Bei einem normalem, das heißt störungsfreien, Produktionsablauf sehen die Komponentendruckverläufe typischerweise aus wie in Figur 4 dargestellt. Beide Komponentendrücke in Phase 2 sind in etwa so groß oder nur unwesentlich größer als in oder vor Phase 1. Tritt ein Fehler auf, dessen Ursache außerhalb des Bereichs der Dosierung (Dosiermaschine, Mischkopf) liegt, wie beispielsweise bei einem vergessenen Angusskanal 4, so sehen die Verläufe der Komponentendrücke aus wie in Figur 5 abgebildet. Beide Komponentendrücke steigen in Phase 2 sehr stark an, bis der maximal zulässige Druck erreicht wird und die Anlagensteuerung 14 die Dosierung automatisch abschaltet. Durch das erfindungsgemäße Verfahren können die einzelnen Phasen, die durch das hydraulische Schaltsignal und das Initiatorsignal definiert werden, erfasst und unterschieden werden.

Bisher werden RIM-Anlagen gebaut, bei denen die Anlagensteuerung beim Überschreiten des maximal zulässigen Druckes die Dosierung der Komponenten abschaltet. Die Anlagensteuerung gibt bei diesen Anlagen aber keine Information aus, zu welchem Zeitpunkt und damit in welcher Phase der Produktion und aufgrund welcher Ursache der maximal zulässige Druck überschritten wird. Erst durch das Erkennen des Zusammenhangs zwischen dem Überschreiten des maximal zulässigen Druckes beider Komponenten und dem Zeitpunkt dieses Ereignisses, der mit den verschiedenen Phasen der Produktion korreliert, ist es möglich, Rückschlüsse auf den Ort der Fehlerursache zu ziehen. Denn tritt die Störung beispielsweise erst nach Verstellung der Schieber in Produktionsstellung, das heißt in der zweiten Phase, auf, so liegt die Störung vermutlich nicht im Bereich der Dosierung sondern im Bereich des Angusskanals 4 oder des Formwerkzeugs 5.

Es ist auch möglich, anhand des zeitlichen Verlaufs der Komponentendrücke in Phase 2 abzuschätzen, wie schwerwiegend die aufgetretene Störung ist. Die Analyse der Druckverläufe kann dabei wie folgt durchgeführt werden: Das Zeitintervall $\Delta t$ zwischen Beginn der Phase 2 und dem Erreichen des maximal zulässigen Druckes wird gemessen. Anschließend wird die Differenz von maximal erreichtem Druck $p_{max}$ und Druck $p_1$ in Phase 1 gebildet. Dabei kann der Druck $p_1$ in Phase 1 beispielsweise der über die gesamte Phase 1 gemittelte Druck sein. Anschließend wird der Quotient aus dieser Differenz und dem Zeitintervall $\Delta t$ gebildet.

$$Quotient = \frac{p_{max} - p_1}{\Delta t}.$$

Der Wert des errechneten Quotienten wird mit mindestens einem hinterlegten Vergleichswert für den Quotienten verglichen. Nimmt der Quotient einen Wert an, der größer ist als der Vergleichswert, so deutet dies auf einen schweren Anlagenschaden hin. Ist der Wert des Quotienten kleiner als der Vergleichswert, so deutet dies darauf hin, dass ein kleiner oder gar kein Schaden entstanden ist. Die Schadensbeurteilung kann dabei durch eine Erhöhung der Zahl der hinterlegten Vergleichswerte beliebig genau differenziert werden.

**Beispiele:**

**Beispiel 1: Verschlossener Angusskanal**

Ist der Angusskanal 4 in Figur 2 verschlossen, so steigt der Druck sofort an, sobald die freien Räume im Mischkopf 1, das heißt die Mischkammer 9 und das anschließende Auslaufsystem, mit Reaktionsgemisch gefüllt sind. Der Druckanstieg ist dann abhängig von der Austragsleistung extrem steil. Das bedeutet, dass der Wert des Quotienten hoch ist. Eine solche Störung hat bei Nichtbehebung einen starken Schaden zur Folge, was mit dem hohen Wert des Quotienten korrespondiert.

**Beispiel 2: Zu lange Dosierzeit**

Bei einer zu langen Dosierzeit wird zu viel Polyurethan-Reaktionsgemisch in die Form 5 gefördert. In diesem Fall kommt es in Phase 2 erst sehr spät zum Druckanstieg. Der Druckanstieg erfolgt dabei dann, wenn das Formwerkzeug komplett gefüllt ist. Der Druckanstieg ist dann zudem deutlich flacher als im ersten Beispiel, da ein herkömmliches Formwerkzeug nie ganz dicht schließt. Somit kann immer etwas Reaktionsgemisch aus dem Formwerkzeug austreten. Wird hierbei der maximal zulässige Druck überschritten, so entsteht kein oder nur ein geringer Anlagenschaden. Der Quotienten nimmt für diesen Fall einen kleinen Wert an.

**Patentansprüche**

1. Verfahren zur Herstellung von zelligen oder kompakten Polyurethan-Formteilen, bei dem mindestens eine Isocyanatkomponente und mindestens eine Polyolkomponente mit einer Dosiermaschine (2) über Komponentenleitungen (3) in einen Mischkopf (1) dosierend gefördert und in der Mischkammer (9) zu einem Polyurethan-Reaktionsgemisch vermischt werden, und anschließend das Polyurethan-Reaktionsgemisch aus der Mischkammer (9) in eine Form (5) ausgetragen wird, bei dem die Dosierung der Komponenten in die Mischkammer (9) durch das Öffnen und Schließen von einem oder mehreren Schiebern (6) eingeleitet und beendet wird, durch welche die Öffnungen der Düsen (8) in die Mischkammer (9) geöffnet oder verschlossen werden, und bei dem das Öffnen und Schließen der Schieber (6) hydraulisch erfolgt und durch das Öffnen und Schließen jeweils zugeordneter Hydraulikventile (11) initiiert wird und bei dem die Drücke der Komponenten mittels Druckaufnehmern (13) in den Komponentenleitungen (3) erfasst werden und an eine Überwachungseinrichtung (15) übermittelt werden, und die zeitlichen Verläufe der Drücke mit in der Überwachungseinrichtung (15) hinterlegten Referenz-Druckverläufen verglichen werden und bei Abweichung mindestens eines der gemessenen Druckverläufe von dem hinterlegten Referenz-Druckverlauf über eine vorgegebene Toleranzschwelle hinaus eine Störung signalisiert wird,
**dadurch gekennzeichnet, dass**
auch der Zeitpunkt des Öffnens und Schließens der Hydraulikventile (11) an die Überwachungseinrichtung (15) übermittelt wird, und die Überwachungseinrichtung (15) die übermittelten Stellungen der Hydraulikventile (11) den übermittelten Druckverläufen der Komponenten zeitlich zuordnet, so dass die übermittelten Druckverläufe der Komponenten in Bezug auf den Schussbeginn und das Schussende zeitlich zugeordnet werden können.

2. Verfahren nach Anspruch 1, bei dem auch der Zeitpunkt des Öffnens und Schließens der Schieber (6) an die Überwachungseinrichtung (15) übermittelt wird und bei dem die Überwachungseinrichtung die übermittelten Positionen der Schieber (6) den übermittelten Druckverläufen der Komponenten zeitlich zuordnet.

3. Verfahren nach Anspruch 1 oder 2, bei dem zusätzlich signalisiert wird, an welchem Ort die Abweichung des gemessenen Druckverlaufs von dem hinterlegten Referenz-Druckverlauf über die vorgegebene Toleranzschwelle hinaus aufgetreten ist.

4. Verfahren nach einem der Ansprüche 1 bis 3, bei dem aus den übermittelten Druckverläufen der Komponenten zeitliche Druckgradienten berechnet und mit hinterlegten Referenz-Druckgradienten verglichen werden und aus der Abweichung der Druckgradienten von den Referenz-Druckgradienten die Schwere der Störung abgeschätzt wird.

**Claims**

1. A process for producing cellular or compact polyurethane mouldings, wherein at least one isocyanate component and at least one polyol component are conveyed by a metering machine (2) in dispensing manner into a mixing head (1) via component lines (3) and are mixed in the mixing chamber (9) to form a polyurethane reaction mixture, and subsequently the polyurethane reaction mixture is discharged from the mixing chamber (9) into a mould (5), wherein the metering of the components into the mixing chamber (9) is initiated and terminated by the opening and closing of one or more slides (6) by which the openings of the nozzles (8) into the mixing chamber (9) are opened or closed, and wherein the opening and closing of the slides (6) are effected hydraulically and are initiated by the opening and closing of respectively assigned hydraulic valves (11), the pressures of the components being registered by means of pressure transducers (13) in the component lines (3) and being transmitted to a monitoring device (15), and the temporal profiles of the pressures are compared with reference pressure profiles saved in the monitoring device (15) and a malfunction is signalled in the event of deviation of at least one of the measured pressure profiles from the saved reference pressure profile beyond a predetermined tolerance threshold,
**characterised in that** the times of the opening and closing of the hydraulic valves (11) are also transmitted to the monitoring device (15), and the monitoring device (15) temporally assigns the transmitted positions of the hydraulic valves (11) to the transmitted pressure profiles of the components, so that the transmitted pressure profiles of the components can be temporally assigned with respect to the start of the shot and the end of the shot.

2. Process according to Claim 1, wherein the times of the opening and closing of the slides (6) are also transmitted to the monitoring device (15), and wherein the monitoring device (15) temporally assigns the transmitted positions of the slides (6) to the transmitted pressure profiles of the components.

3. Process according to Claim 1 or 2, wherein a signal is preferably output in addition regarding the location at which the deviation of the measured pressure profile from the stored reference pressure profile beyond the tolerance threshold has occurred.

4. Process according to one of Claims 1 to 3, wherein temporal pressure gradients are calculated from the transmitted pressure profiles of the components and are compared with saved reference pressure gradients and the seriousness of the malfunction is estimated from the deviation of the pressure gradients from the reference pressure gradients.

**Revendications**

1. Procédé pour la fabrication de pièces moulées en polyuréthane compactes ou expansées, dans lequel au moins un composant isocyanate et au moins un composant polyol sont transportés avec dosage avec une machine de dosage (2) par des conduites de composants (3) dans une tête de mélange (1) et sont mélangés dans une chambre de mélange (9) pour donner un mélange réactionnel de polyuréthane, et dans lequel le mélange réactionnel de polyuréthane est ensuite sorti de la chambre de mélange (9) dans un moule (5), procédé dans lequel le dosage des composants dans la chambre de mélange (9) est déclenché et terminé par l'ouverture et la fermeture d'un ou de plusieurs tiroirs (6), par lesquels les ouvertures des filières (8) dans la chambre de mélange (9) sont ouvertes ou fermées, et dans lequel l'ouverture et la fermeture des tiroirs (6) s'effectuent hydrauliquement et sont initialisées par l'ouverture et la fermeture de vannes hydrauliques (11) respectivement affectées et dans lequel les pressions des composants sont saisies au moyen de capteurs de pression (13) dans les conduites de composants (3) et sont communiquées à un dispositif de surveillance (15), et les variations des pressions en fonction du temps sont comparées à des variations de pression de référence enregistrées dans le dispositif de surveillance (15) et, en cas d'écart, au-delà d'un seuil de tolérance, d'au moins une des variations des pressions par rapport à la variation de pression de référence enregistrée, une perturbation est signalée, **caractérisé en ce que** l'instant de l'ouverture et de la fermeture des vannes hydrauliques (11) lui aussi est communiqué au dispositif de surveillance (15) et **en ce que** le dispositif de surveillance (15) fait correspondre en fonction du temps les positions communiquées des vannes hydrauliques (11) aux variations de pression communiquées, de telle sorte que les variations de pression communiquées des composants peuvent être affectées du point de vue du début et de la fin du cycle de production.

2. Procédé selon la revendication 1, dans lequel l'instant de l'ouverture et de la fermeture des tiroirs (6) est communiqué lui aussi au dispositif de surveillance (15) et dans lequel le dispositif de surveillance fait correspondre en fonction du temps les positions communiquées des tiroirs (6) aux variations de pression communiquées des composants.

3. Procédé selon la revendication 1 ou 2, dans lequel il est signalé en plus à quel emplacement l'écart, au-delà du seuil de tolérance, de la variation de pression mesurée par rapport à la variation de pression de référence enregistrée s'est produit.

4. Procédé selon l'une des revendications 1 à 3, dans lequel, à partir des variations de pression communiquées des composants, des gradients de pression en fonction du temps sont calculés et sont comparés à des gradients de pression enregistrés, et à partir de l'écart des gradients de pression par rapport aux gradients de pression de référence, la gravité de la perturbation est estimée.

Fig. 1

Fig. 2

Fig. 3

## Fig. 4

EP 1 437 210 B1

Fig. 5